**Europäisches Patentamt**

**European Patent Office**

**Office européen des brevets**

(19)

(11) Veröffentlichungsnummer: **0 137 899**
**B1**

(12) **EUROPÄISCHE PATENTSCHRIFT**

(45) Veröffentlichungstag der Patentschrift:
**22.06.88**

(51) Int. Cl.⁴: **B 60 K 41/14**, F 16 H 11/06

(21) Anmeldenummer: **84105107.1**

(22) Anmeldetag: **05.05.84**

(54) Steuerventil für ein Steuerventilsystem eines stufenlos regelbaren Umschlingungsgetriebes.

(30) Priorität: **14.09.83 DE 3333136**

(43) Veröffentlichungstag der Anmeldung:
**24.04.85 Patentblatt 85/17**

(45) Bekanntmachung des Hinweises auf die Patenterteilung:
**22.06.88 Patentblatt 88/25**

(84) Benannte Vertragsstaaten:
**BE DE FR GB IT NL SE**

(56) Entgegenhaltungen:
**EP - A - 0 027 672**
**EP - A - 0 059 426**
**EP - A - 0 073 475**
**DE - A - 3 000 581**
**GB - A - 2 057 606**
**GB - A - 2 058 256**
**GB - A - 2 076 084**

(73) Patentinhaber: **FORD-WERKE AKTIENGESELLSCHAFT,
Ottoplatz 2 Postfach 21 03 69, D-5000 Köln 21 (DE)**
(84) Benannte Vertragsstaaten: **BE DE IT NL SE**

(73) Patentinhaber: **FORD MOTOR COMPANY LIMITED,
Eagle Way, Brentwood Essex CM13 3BW (GB)**
(84) Benannte Vertragsstaaten: **GB**

(73) Patentinhaber: **FORD FRANCE SOCIETE ANONYME,
344 Avenue Napoléon Bonaparte B.P. 307, F-92506 Rueil
Malmaison Cedex (FR)**
(84) Benannte Vertragsstaaten: **FR**

(72) Erfinder: **Eggert, Ulrich, Dürener Strasse 54,
D-5000 Köln 41 (DE)**

(74) Vertreter: **Ritzkowsky, Harald, Dipl.-Ing., Ford-Werke
Aktiengesellschaft Patentabteilung
Z/DRR-2 Ottoplatz 2, D-5000 Köln 21 (DE)**

**Beschreibung**

Die Erfindung bezieht sich auf ein Steuerventilsystem für ein stufenlos regelbares Umschlingungsgetriebe der im Oberbegriff des Patentanspruches 1 erläuterten Art.

Aus der EP-A 27 672 ist ein Steuerventilsystem für ein stufenlos regelbares Umschlingungsgetriebe der im Oberbegriff des Patentanspruches 1 erläuterten Art mit Ausnahme des das Hilfsventil betreffenden Merkmales bekannt. Bei dem am Ende des Oberbegriffes genannten Hilfsventil handelt es sich um einen internen Stand der Technik von dem die Anmelderin ausgeht.

Aus der GB-A 2 057 606 ist ein Steuerventilsystem zur Einstellung eines stufenlos regelbaren Getriebes bekannt, bei dem ein Übersetzungssteuerventil mit einem Ventilelement versehen ist, das an einem Ende in Abhängigkeit von einer gewünschten Soll-Drehzahl des Verbrennungsmotors und am anderen Ende über eine Steuerleitung in Abhängigkeit von der Ist-Drehzahl der Motorwelle druckbeaufschlagt ist, wobei der die Soll-Drehzahl verkörpernde Steuerwert wahlweise in bestimmten Betriebszuständen variierbar ist, um die Funktion des Übersetzungssteuerventiles zu modifizieren. Die die Soll-Drehzahl verkörpernden Signale sind hierbei in Abhängigkeit von Signalen steuerbar, die in einer elektronischen Steuereinheit in Form eines Kennfeldes abgespeichert sind und die von unterschiedlichen Betriebszuständen abhängig sind.

Das erstgenannte Steuerventilsystem weist den Nachteil auf, dass die gewünschte Soll-Drehzahl des Verbrennungsmotors über eine Kurvenscheibe festgelegt ist, die durch die Öffnungsbewegung der Drosselklappe des Verbrennungsmotors verdreht wird. Bei einer aktiven Fahrweise erfüllt diese Kurvenscheibe im wesentlichen die von ihr erwartete Funktion, bei einer passiven Fahrweise, z.B. im Schiebebetrieb, führt diese Anordnung infolge der im Schiebebetrieb geschlossenen Drosselklappe speziell bei Motorbremsung zu einer unerwünschten Übersetzungssteuerung. Daher wurde das im letzten Teil des Oberbegriffes des Patentanspruches 1 erwähnte Hilfsventil bereits in das Steuerventilsystem aufgenommen.

Das an zweiter Stelle genannte Steuerventilsystem weist zwar den Vorteil auf, dass die gewünschte Soll-Drehzahl des Verbrennungsmotors durch Signale vorgegeben ist die in einer elektronischen Steuereinheit in einem Kennfeld abgespeichert sind und wobei das Kennfeld entsprechend den unterschiedlichen Betriebszuständen entsprechende Soll-Drehzahlen aufweist, das vorgesehene Kennfeld kann jedoch nur eine vorgegebene Betriebsweise des Kraftfahrzeuges unterstützen bzw. steuern.

Die Aufgabe der Erfindung ist es, ein Steuerventilsystem der eingangs genannten Art derart zu verbessern, dass eine einfachere und vielseitigere Anpassung der bekannten Getriebeanordnung mit ihrem Steuerventilsystem an unterschiedliche Verbrennungsmotoren vorgenommen werden kann, indem die Steuerung über ein in einer elektronischen Steuereinheit abgespeichertes Kennfeld bewirkt wird, darüber hinaus soll dem Fahrzeuglenker jedoch nicht nur eine vorgegebene Betriebsweise des Kraftfahrzeuges zur Verfügung gestellt werden, sondern es sollen zumindest zwei alternative Kennfelder in der elektronischen Steuereinheit bereitgehalten werden, die nach Wunsch des Fahrers zur Wirkung gebracht werden können.

Gemäss der Erfindung wird diese Aufgabe gelöst, indem ein Steuerventilsystem der im Oberbegriff des Patentanspruches 1 erläuterten Art, die im Kennzeichenteil des Patentanspruches 1 erläuterten Merkmale aufweist.

Dadurch, dass das Hilfsventil in an sich bekannter Weise über einen elektromagetischen Druckregler in Abhängigkeit von Signalen steuerbar ist, die in einer elektronischen Steuereinheit in Form von unterschiedlichen Betriebszuständen zugeordneten Kennfeldern abgespeichert sind und die elektrischen Signale in Form von zumindest zwei unterschiedlichen Betriebsweisen zugeordneten kompletten Kennfeldern von gewünschten Soll-Drehzahlen des Verbrennungsmotors abgespeichert sind, wird dem Fahrer des Kraftfahrzeuges die Möglichkeit geboten z.B. das Fahrzeug in einer besonders kraftstoffsparenden Betriebsweise oder aber in einer besonders sportlich, agilen Betriebsweise zu betreiben.

Die Erfindung wird anhand eines in der beiliegenden Zeichnung gezeigten Ausschnitt eines Steuerventilsystems näher erläutert.

Es zeigt:

Fig. 1 den Teil eines Steuerventilsystems, in dem das Übersetzungssteuerventil und das Hilfsventil angeordnet ist;

Fig. 2 ein Diagramm über Ausführungsmöglichkeiten von der Drosselklappenöffnungsbewegung zugeordneten Kennlinie für gewünschte Solldrehzahlen;

Fig. 3 ein Diagramm über die Übersetzungsänderung bezogen auf die Motordrehzahl und die Fahrgeschwindigkeit bei wirtschaftlicher Auslegung E des Kennfeldes;

Fig. 4 ein Diagramm über die Übersetzungsänderung bezogen auf die Motordrehzahl und die Fahrgeschwindigkeit bei leistungsbezogener Auslegung P des Kennfeldes und

Fig. 5 ein Drehmomentdiagramm des Verbrennungsmotors mit den Übersetzungsauslegungen entsprechend der unterschiedlichen Kennfelder in bezug auf den optimalen Betriebspunkt des Motors;

Fig. 6 ein Übersetzungskennfeld bezogen auf die Motordrehzahl und die Fahrgeschwindigkeit bei rein hydraulischer Übersetzungssteuerung.

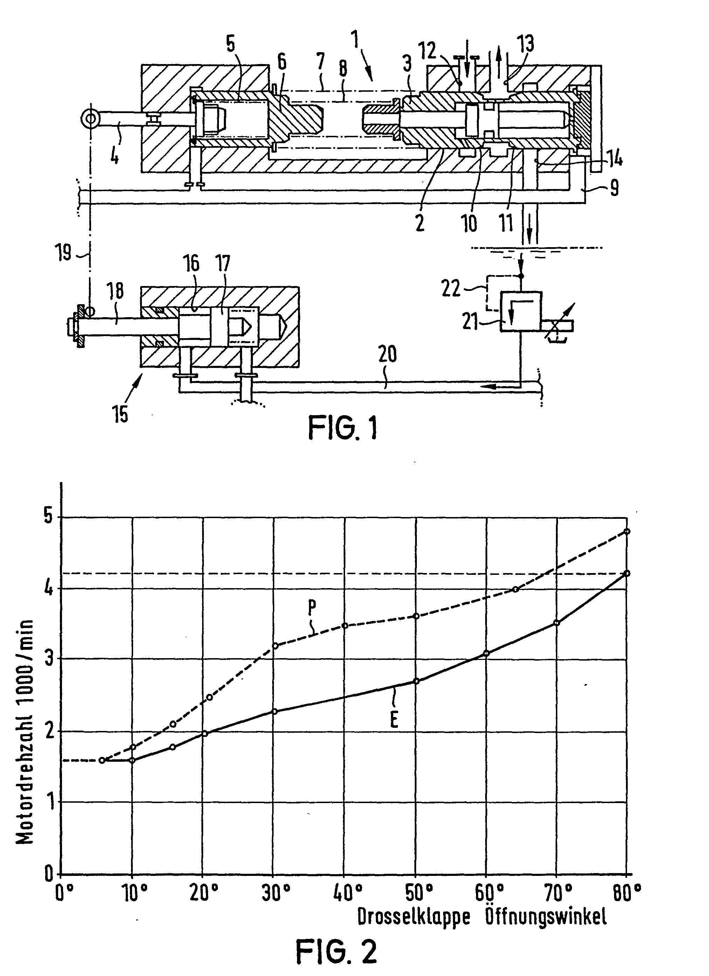

Der in Fig. 1 gezeigte Ausschnitt aus einem Steuerventilsystem der bekannten Art, wurde auf das Übersetzungssteuerventil und das Hilfsventil beschränkt, da diese zur Erläuterung der Erfindung ausreichend sind und eine vollständige Beschreibung des bekannten Steuerventilsystem in der veröffentlichten EP-OS 0 027 672 dem Fachmann zugänglich ist.

Ein Übersetzungssteuerventil 1 besteht im wesentlichen aus einem in einer Ventilbohrung 2 angeordneten Ventilelement 3, das an einem Ende über ein mechanisches Gestänge 4, eine Feder 5 und einen Kolben 6 über eine Federanordnung 7 und 8 in Abhängigkeit von einer gewünschten Solldrehzahl und am anderen Ende über eine hydraulische Leitung 9 in Abhängigkeit von der Drehzahl der Primärwelle druckbeaufschlagt ist.

Der Ventilkörper 3 weist hierbei Steuerbünde 10 und 11 auf, über die der an einem Einlass 12 anliegende Leitungsdruck entsprechend den auf den Ventilkörper 3 einwirkenden einander entgegengerichteten Druckkräften, einerseits dem Sollwert in Form einer Federkraft und andererseits dem Istwert in Form eines Pitotdruckes, moduliert wird und einer Leitung 13 zugeführt wird, die zum Primärservo führt. Benachbart den Steuerbünden 10 und 11 ist auch ein Auslass 14 zum Sumpf vorgesehen.

Ein Hilfsventil 15 besteht aus einem in einer Ventilbohrung 16 angeordneten Ventilkörper 17, der über eine Kolbenstange 18 und eine mechanische Verbindung 19 mit dem Gestänge 4 des Übersetzungssteuerventiles 1 verbunden ist. Auf eine Seite des Ventilkörpers 17 wirkt hierbei über eine hydraulische Leitung 20 ein Steuerdruck ein, der von einem elektromagnetischen Druckregler 21 erstellt wird. Dieser elektromagnetische Druckregler 21 wird über eine elektrische Steuerleitung 22 von einer elektronischen Steuereinheit angesteuert, die in einem Kennfeld unterschiedlichen Betriebszuständen zugeordnete Solldrehzahlen abgespeichert enthält.

In Fig. 2 ist ein Diagramm gezeigt, indem über den Drosselklappenwinkeln die Motordrehzahl aufgetragen ist. Eine durchgehende Linie E zeigt hierbei eine Auslegung für einen wirtschaftlichen Betrieb wohingegen eine gestrichelte Linie P eine Auslegung für einen leistungsorientierten Betrieb zeigt.

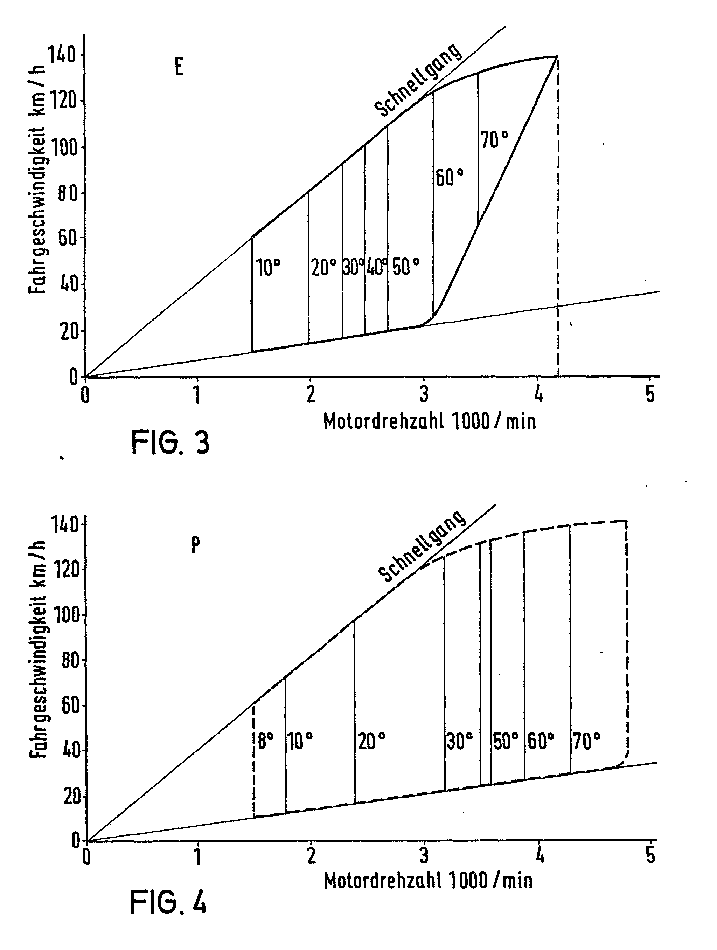

In den Fig. 3 und 4 sind Diagramme gezeigt, bei denen über der Motordrehzahl die Fahrgeschwindigkeit aufgetragen ist. In dem Übersetzungskennfeld der Fig. 3, das für einen wirtschaftlichen Betrieb E ausgelegt ist, ist zu ersehen, dass eine Hochregelung der Übersetzung in Richtung Schnellgang bereits bei niedrigen Motordrehzahlen erfolgt.

Aus dem Übersetzungskennfeld in Fig. 4, das dem leistungsorientierten Betrieb P entspricht, ist zu entnehmen, dass ein Hochregeln der Übersetzung in Richtung des Schnellganges erst wesentlich später bei höheren Motordrehzahlen erfolgt. Damit wird zwar eine bessere Beschleunigung erzielt, der Kraftstoffverbrauch jedoch erhöht.

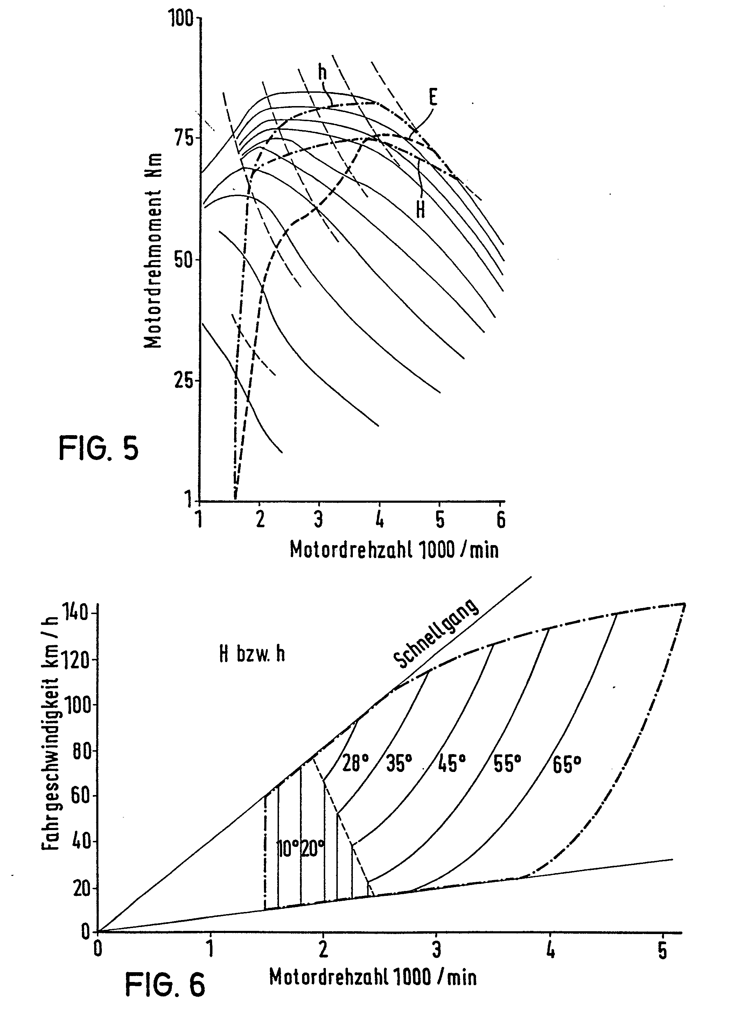

In Fig. 5 ist das Drehmomentdiagramm eines 1,1 l Verbrennungsmotors in Verbindung mit einem stufenlos regelbaren Getriebe gemäss einem Übersetzungskennfeld entsprechend Fig. 3 und diesem zugeordneter Betriebs-Kennlinie gezeigt, wobei zum Vergleich die entsprechenden Betriebs-Kennlinien in Strich-Punkt-Linien gezeigt sind, die mit einer herkömmlichen hydraulischen Steuerung erzielt werden können, wobei die Linie h bei niedrigen Geschwindigkeiten und die Linie H bei hohen Geschwindigkeiten erzielt wird.

In Fig. 6 ist zur Gegenüberstellung zu den Fig. 3 und 4 das Übersetzungskennfeld einer bekannten hydraulischen Steuerung gezeigt.

Es fällt hierbei auf, dass die Linien gleicher Drosselklappenöffnungen anders verlaufen, und zwar nicht wie es wünschenswert wäre, in der senkrechten Richtung wie in den Fig. 3 und 4, sondern in einer bogenförmigen Abweichung, die sich aus dem in den hydraulischen Elementen erforderlichen Kompromiss herleitet.

Um eine elektronische Steuereinheit in die Lage zu versetzen, ein entsprechendes gespeichertes Kennfeld den verschiedenen Betriebsbedingungen entsprechend zugeordnet abzurufen, muss innerhalb der Gesamtanordnung ein Sensor für die Drosselklappenstellung, einer für die Motordrehzahl sowie ein Sensor für die Wählhebelstellung bzw. die Programmwahl vorgesehen werden.

Ein Sensor bzw. Schalter für die Fahrprogrammwahl ermöglicht es von zumindest zwei unterschiedlich ausgelegten Kennfeldprogrammen eines zur Steuerung des Steuerventilsystems zur Anwendung zu bringen.

So kann z.B. in der elektronischen Steuereinheit das Kennfeld nach Fig. 3 als auch nach Fig. 4 zur Verfügung stehen und je nach Wunsch des Fahrers durch Betätigen des Programmwählschalters zur Anwendung kommen.

## Patentansprüche

1. Steuerventilsystem für ein stufenlos regelbares Umschlingungsgetriebe, bei dem auf einer Primärwelle angeordnete Kegelscheiben über ein Primärservo und bei dem auf einer Sekundärwelle angeordnete Kegelscheiben über ein Sekundärservo axial verlagerbar sind, um die Übersetzung des Riementriebes zu verändern, wobei das Steuerventilsystem zum Beaufschlagen der Servos eine aus dem Sumpf ansaugende Druckmittelpumpe, ein Hauptregulierventil und ein Übersetzungssteuerventil (1) umfasst und wobei das Hauptregulierventil aus einem in einer Ventilbohrung angeordneten Ventilelement besteht, das an einem Ende über ein mechanisches Gestänge und eine Feder in Abhängigkeit von der Übersetzung des Riementriebes und am anderen Ende über eine hydraulische Leitung in Abhängigkeit von der Ist-Drehzahl der Primärwelle durckbeaufschlagt ist und einen regulierten Leitungsdruck zum Sekundärservo und über das Übersetzungssteuerventil (1) zum Primärservo führt und wobei das Übersetzungssteuerventil (1) aus einem in einer Ventilbohrung (2) angeordneten Ventilelement (3) besteht, das an einem Ende über ein mechanisches Gestänge (4) und eine Feder (5) und einem Kolben (6) in Abhängigkeit von einer gewünschten Soll-Drehzahl des Verbrennungsmotors und am anderen Ende über eine hydraulische Leitung (9) in Abhängigkeit von der Ist-Drehzahl der Primärwelle druckbeaufschlagt ist und wobei an das mechanische Gestänge (4) über eine mechanische Verbindung ein Hilfsventil (15) angeschlossen ist, das wahlweise in bestimmten Betriebszuständen beaufschlagbar ist, um die Funktion des Übersetzungssteuerventiles (1) zu modifizieren, dadurch gekennzeichnet, dass das Hilfsventil (15) in an sich bekannter Weise über einen elektromagnetischen Druckregler (21) in Abhängigkeit von Signalen steuerbar ist, die in einer elektronischen Steuereinheit in Form von unterschiedlichen Betriebszuständen zugeordneten Kennfeldern abgespeichert sind, wobei die elektrischen Signale in Form von zumindest zwei unterschiedlichen Betriebsweisen zugeordneten kompletten Kennfeldern von gewünschten Soll-Drehzahlen abgespeichert sind.

2. Steuerventilsystem nach Anspruch 1, dadurch gekennzeichnet, dass der elektronischen Steuereinheit ein Sensor für die Drosselklappenstellung, einen Sensor für die Ist-Motor-Drehzahl sowie ein Sensor für die Wählhebel- oder Programmwahl-Stellung zugeordnet sind, so dass je nach gewählter Betriebsweise das einer wirtschaftlichen oder das einer sportliche Fahrweise entsprechende Kennfeld von Soll-Drehzahlen abrufbar ist.

### Claims

1. A control valve system for a continuously variable belt transmission, in which cone pulleys mounted on a primary shaft are axially displaceable by way of a primary servo and in which cone pulleys mounted on a secondary shaft are axially displaceable by way of a secondary servo, in order to vary the transmission ratio of the belt drive, the control valve system for acting upon the servos comprising a pressure-medium pump which draws in from a sump, a main regulating valve and a transmission ratio control valve (1), and the main regulating valve consisting of a valve element which is disposed in a valve bore and which is acted upon with pressure at one end by way of a mechanical rod system and a spring as a function of the transmission ratio of the belt drive and at the other end by way of an hydraulic pipe as a function of the actual rotational speed of the primary shaft and which supplies a regulated pipe pressure to the secondary servo and by way of the transmission ratio control valve (1) to the primary servo, and the transmission ratio control valve (1) comprising a valve element (3) which is disposed in a valve bore (2) and which is acted upon with pressure at one end by way of a mechanical rod system (4) and a spring (4) and a piston (6) as a function of a desired rated rotational speed of the internal combustion engine and at the other end by way of an hydraulic pipe (9) as a function of the actual rotational speed of the primary shaft, and an auxiliary valve (15), which can optionally be acted upon in certain operating conditions, being connected to the mechanical rod system (4) by way of a mechanical connexion, in order to modify the operation of the transmission ratio control valve (1), characterized in that the auxiliary valve (15) can be controlled in a manner known per se by way of an electromagnetic pressure regulator (21) as a function of signals which are stored in an electronic control unit in the form of characteristic diagrams associated with different operating conditions, the electrical signals being stored in the form of at least two complete characteristic diagrams of desired rated rotational speeds which are associated with different modes of operation.

2. A control valve system according to Claim 1, characterized in that the electronic control unit has associated with it one sensor for the throttle valve position, one sensor for the actual rotational speed of the engine and one sensor for the selector lever position or programme selection position, so that depending upon the mode of operation selected the characteristic diagram corresponding to an economical or an adventurous manner of driving can be recalled from rated rotational speeds.

### Revendications

1. Système de valve de commande pour une transmission à courroie à variation continue, dans lequel des poulies coniques montées sur un arbre primaire peuvent être déplacées axialement au moyen d'un servo-dispositif primaire et dans lequel des poulies coniques montées sur un arbre secondaire peuvent être déplacées axialement au moyen d'un servo-dispositif secondaire, pour faire varier la démultiplication de la transmission à courroie, le système de valve de commande comprenant, pour charger les servo-dispositifs, une pompe de fluide de pression qui aspire dans le carter, une valve régulatrice principale et une valve (1) de commande de démultiplication, la valve régulatrice principale comportant un élément obturateur monté dans un alésage de valve, qui est chargé en pression, à une extrémité, par l'intermédiaire d'une tringlerie mécanique et d'un ressort, en fonction de la démultiplication de la transmission à courroie et, à l'autre extrémité, par l'intermédiaire d'une conduite hydraulique, en fonction de la vitesse de rotation réelle de l'arbre primaire, et envoyant une pression de conduite régulée au servo-dispositif secondaire et, par l'intermédiaire de la valve (1) de commande de démultiplication, au servo-dispositif primaire, et la valve (1) de commande de démultiplication comportant un élément obturateur (3) monté dans un alésage de valve (2), qui est chargé en pression, à une extrémité par l'intermédiaire d'une tringlerie mécanique (4) et d'un ressort (5) ainsi que d'un piston (6), en fonction d'une vitesse de rotation de consigne désirée du moteur à combustion interne et, à l'autre extrémité, par l'intermédiaire d'une conduite hydraulique (9), en fonction de la vitesse de rotation réelle de l'arbre primaire, cependant qu'à la tringlerie mécanique (4) est reliée, par l'intermédiaire d'une liaison mécanique, une valve auxiliaire (15) qui peut être sollicitée sélectivement dans certains états de fonctionnement, pour modifier le fonctionnement de la valve de commande de multiplication (1), caractérisé en ce que la valve auxiliaire (15) peut être commandée, d'une façon connue en soi, par l'intermédiaire d'un régulateur de pression électromagnétique (21), en fonction de signaux qui sont mémorisés dans une unité de commande électronique, sous la forme de diagrammes caractéristiques associés à différents états de fonctionnement, les signaux électriques étant mémorisés sous la forme d'au moins deux diagrammes caractéristiques complets de vitesses de rotation de consigne désirées associés à des modes de fonctionnement différents.

2. Système de valve de commande selon la revendication 1, caractérisé en ce qu'à l'unité de commande électronique, sont associés un capteur pour la position du papillon des gaz, un capteur pour la vitesse de rotation réelle du moteur, ainsi qu'un capteur pour la position du levier de sélection ou la position de la sélection de programme, de sorte que, selon le mode de fonctionnement sélectionné, peut être appelé, soit le diagramme caractéristique de vitesse de rotation de consigne correspondant à un mode de fonctionnement économique, soit le diagramme caractéristique de vitesse de rotation de consigne correspondant au mode de fonctionnement sportif.

0 137 899

FIG. 1

FIG. 2

Motordrehzahl 1000 / min

Drosselklappe Öffnungswinkel

FIG. 3

FIG. 4

FIG. 5

*x-axis:* Motordrehzahl 1000 /min
*y-axis:* Motordrehmoment Nm

FIG. 6

*x-axis:* Motordrehzahl 1000 /min
*y-axis:* Fahrgeschwindigkeit km / h

H bzw. h

Schnellgang

10° 20° 28° 35° 45° 55° 65°